(19)

**Europäisches Patentamt**
**European Patent Office**
**Office européen des brevets**

(11) **EP 4 668 412 B1**

(12) **EUROPEAN PATENT SPECIFICATION**

(45) Date of publication and mention
of the grant of the patent:
**10.06.2026   Bulletin 2026/24**

(21) Application number: **25157404.2**

(22) Date of filing: **12.02.2025**

(51) International Patent Classification (IPC):
***H01M 10/54*** (2006.01)          ***C22B 1/00*** (2006.01)
***H01M 10/44*** (2006.01)

(52) Cooperative Patent Classification (CPC):
**H01M 10/54; C22B 1/005;** H01M 10/441;
H01M 10/448; Y02W 30/84

(54) **A METHOD OF DISCHARGING A BATTERY CELL**

VERFAHREN ZUM ENTLADEN EINER BATTERIEZELLE

PROCÉDÉ DE DÉCHARGE D'UNE CELLULE DE BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **17.06.2024   CZ 20240247**

(43) Date of publication of application:
**24.12.2025   Bulletin 2025/52**

(73) Proprietor: **Ceske vysoke uceni technicke v Praze
160 00 Praha 6 - Dejvice (CZ)**

(72) Inventors:
• **Prazanova, Anna
  56904 Brnenec (CZ)**
• **Plachy, Zbynek
  78332 Naklo (CZ)**

• **Knap, Vaclav
  50901 Nova Paka (CZ)**

(74) Representative: **Poljak, Michal
  Nove sady 988/2
  602 00 Brno (CZ)**

(56) References cited:
**CN-A- 104 183 887**

• **NEMBHARD SHANTELLE ET AL: "Safe,
  Sustainable Discharge of Electric Vehicle
  Batteries as a Pre- treatment Step to Crushing in
  the Recycling Process", KTH SCHOOL OF
  INDUSTRIAL ENGINEERING AND
  MANAGEMENT, 17 December 2020 (2020-12-17),
  pages 1 - 66, XP055868551**

EP 4 668 412 B1

**Description**

Field of technology

The present invention relates to a method of discharging battery cells for the purpose of waste and recycling pre-treatment thereof.

Prior art

In the prior art, electrochemical and non-electrochemical processes for discharging (waste) battery cells are known. In electrochemical processes, the discharge of the cells involves contact of electrode contacts with a conductive liquid medium, typically in the form of salt solutions, and significant damage and corrosion of the cell contacts, which is associated with the release of their contents (i. e. packing materials, sleeves, contact materials and cell materials) into the entire volume of the bath and its complete contamination. Toxic components of the electrolytes are also released into the bath, which react with the humidity in the air and evaporate into the air as toxic gases. When implementing these processes, it is therefore necessary to ensure constant ventilation or closed atmospheres, which increase the investment cost of the entire solution. In addition, the application of these conventional electrochemical methods affects the overall quality and quantity of the final product, the black mass (finely ground fraction of the battery cell electrode materials that are rich in rare or important metals). Quality is reduced by corrosion of the materials and contamination of the battery component structures from chemical compounds in the bath solutions, usually salt-based. The blackmass quantity is reduced by releasing the battery cell materials into the bath solution, and for its subsequent recovery, it needs to be isolated, e. g. by additional leaching of the bath solution, which leads to a significant increase in cost. The publication by Nan et al. titled "Recovery of metal values from spent lithium-ion batteries with chemical deposition and solvent extraction" (Journal of Power Sources 152 (2005) 278-284, available at doi:10.1016/j.jpowsour.2005.03.134) describes in Section 3.1 the discharge of a battery cell using a metal powder in water, under mechanical agitation for 30 min and in a stainless steel container. Despite the published functionality, an empirical drawback has been shown to be the high transient resistance between the metal powder particles, which, without mechanical agitation, does not allow sufficient conduction of the electric current and short-circuiting and discharging of the battery.

The publication by Gratz et al. titled "A closed loop process for recycling spent lithium ion batteries" (Journal of Power Sources 262 (2014) 255-262, available at http://dx.doi.org/10.1016/j.jpowsour.2014.03.126) describes in section 2.2 (step 1) the discharge of a battery cell using stainless steel chips according to the procedure of Nan et al., therefore in water and for 4 h. The stainless steel chips have no defined shape, size or origin.

The final thesis by Nembhard titled "Safe, Sustainable Discharge of Electric Vehicle Batteries as a Pre-treatment Step to Crushing in the Recycling Process" (available at http://kth.diva-portal.org/smash/get/diva2:1339943/FULL TEXT01.pdf), describes in a first embodiment in Section 2.7.2 the discharge of a battery cell using a metal powder in a salt solution. The disadvantage of using a salt solution is the corrosion of the electrode contacts of the battery cell, which increases the risk of electrolyte leakage. In another embodiment, Nembhard describes in Sections 3.5, 3.5.1, 4.4 and 4.4.2 the discharging of a battery cell using metal staples (specifically Office Depot Chrome Staples or Rapid Super Strong 9/12 Staples) in distilled water for 1 hour (cell voltage drop to 0.5 V). The staples have a defined shape, an area-to-volume ratio typically less than 2 mm$^{-1}$, and a thickness typically greater than 0.5 mm. The disadvantages of staples, according to the thesis in Section 4.4.2 and Figure 21, are their overburning, rusting, rust deposition on the battery cell and the unsustainability and impracticality of using staples for this purpose. In addition, overburning and rust formation increases resistance, reduces conductivity, and thus complicates the discharge process.

The European patent application EP 4020663 A1 describes a method of discharging a battery cell by means of an electrically conductive bulk material (e. g. stainless steel chips or staples) in an electrically conductive liquid (e. g. an aqueous salt solution). The stainless steel chips are specified in Example 3 of said document to a substantially conical shape with a diameter of approximately 10 mm, in combination with a 10% aqueous $Na_2CO_3$ solution. The disadvantage of using a salt solution is the corrosion of the electrode contacts of the battery cell, which increases the risk of electrolyte leakage.

Other methods of discharging battery cells are described in the international patent application WO 2023106416 A1, the Chinese patent application CN 104183887 A and in the publications Neha Garg et al., Sustainable Energy Fuels, The Royal Society of Chemistry, 28 May 2024, Vol. 8, p. 2777-2788 titled "Enhanced electrochemical discharge of Li-ion batteries for safe recycling"; Dawei Yu et al, Minerals Engineering, Nov. 1, 2021, Vol. 173, p. 107218 titled "Pretreatment options for the recycling of spent lithium-ion batteries: A comprehensive review"; and Lin Peng Yao et al., Journal of Cleaner Production, Feb. 1, 2020, Vol. 245, p. 118820 titled "An environmentally friendly discharge technology to pretreat spent lithium-ion batteries".

Therefore, a need arises in the prior art and the object of the invention is to provide a safe, sustainable and fast non-electrochemical method of discharging a battery cell.

## Summary of the invention

Said object is achieved by a method of discharging a battery cell, comprising mixing the battery cell, a liquid coolant and metal fragments such that electrode contacts of the battery cell are immersed in the liquid coolant, wherein the metal fragments have an area-to-volume ratio in the range of 2 to 11 mm$^{-1}$ and a thickness in the range of 0.1 to 0.5 mm. The term "metal fragment" means a metal chip, swarf or shavings and not a particle or clumps of metal powder.

The underlying idea of the method according to the present invention is that the battery cells are discharged by a short-circuit current generated by connecting the electrode contacts by means of the metal fragments in the liquid coolant. During the discharge process, the voltage across the cell contacts drops very rapidly, with typical discharges below 1 V within 30 min, preferably below 0.5 V within 15 min, for cells in a transport state with ~30% SOC (e. g. between 25 and 35% SOC). Complete discharge and a drop in the total battery cell voltage (i. e. voltage after regeneration for at least 24 h) below 1 V occurs when cells at the end of their lifetime are discharged for at least 5 h, fully charged cells (100% SOC) for at least 18 h, preferably for cells in a transport state (~30% SOC) for at least 15 h. This voltage value is safe for further recycling pre-processing steps, including crushing and grinding steps, and completely eliminates the potential risk of ignition, short-circuiting or sparking.

The term "voltage across electrode contacts of a battery cell" means the effective voltage across the contacts prior to regeneration of the cell, i. e. prior to charge distribution across the cell. The term "total battery cell voltage" means the total voltage across the contacts after regeneration of the cell, i. e. after charge distribution across the cell. Regeneration means leaving the cell for a minimum of 24 hours for the voltage to settle. SOC means state of charge.

Discharging below the liquid coolant level brings increased safety to the entire process, eliminating the risk of thermal runaway, sparking or burning of metal fragments. The battery cells can be discharged in large quantities, there is no need to discharge each battery cell individually.

Metal fragments that are too large (i. e. area-to-volume ratio less than 2 mm$^{-1}$ and thickness greater than 0.5 mm) may not make contact between themselves and the electrode contacts of the battery cell to form a conductive path. Too small and irregularly shaped metal fragments (i. e. area-to-volume ratio greater than 11 mm$^{-1}$ and thickness less than 0.1 mm, e. g. metal filings, which are spiral-shaped with sharp edges, rounded parts, hooks, beaks, etc.) can on the other hand get stuck one with another and form clusters that also prevent contact with the electrode contacts of the battery cell, wherein too small a size of metal fragments leads to their rapid overburning by the high short-circuit current of the battery during the resulting electric arc, which leads to a significant reduction in conductivity and thus in an increase in discharge time.

In a preferred embodiment, the metal fragments have an area-to-volume ratio greater than 2.2 mm$^{-1}$, preferably in the range of 4 to 10 mm$^{-1}$ (e. g. 5 to 8 mm$^{-1}$), and a thickness of less than 0.45 mm, preferably in the range of 0.1 to 0.25 mm (e. g. 0.1 to 0.2 mm).

In a preferred embodiment, the metal fragments are waste products of subtractive manufacturing processes, in particular machining, cutting, turning or milling.

In a preferred embodiment, the liquid coolant is water (e. g. drinking water, utility water, demineralised water, distilled water, industrial water), mineral oil (e. g. transformer oil), or glycerol, or mixtures thereof (in any ratio), wherein the liquid coolant does not have a corrosive effect on the electrode contacts (unlike e. g. salt solutions).

In a preferred embodiment, the conductivity of the metal fragments is in the range of 0.5 to 60 MS/m, i. e. the metal fragment may be a common metal material such as iron, steel, stainless steel, aluminum or copper.

## Brief description of the drawings

Figure 1 schematically shows a container with a liquid coolant, a battery cell and metal fragments.

Figures 2A to 2C show images of metal fragments according to the present invention (metal swarf from machining).

Figures 3A to 3E show images of unsuitable metal fragments (metal filings from cutting).

Figure 4 shows the cell discharge process as a dependence of the voltage across the electrode contacts of the battery cell (SOC~ 30%) on the discharge time in different liquid coolants.

Figure 5 shows the cell regeneration process as a dependence of the total battery cell voltage on the regeneration time in different liquid coolants.

## Examples

Example 1

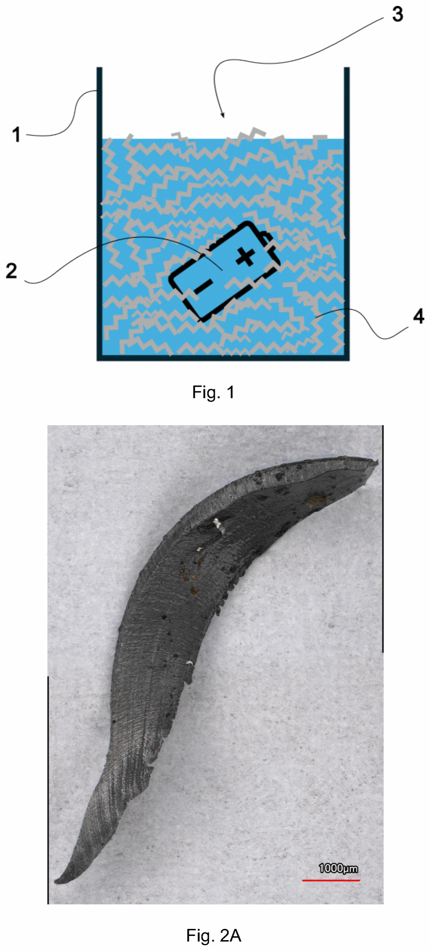

Figure 1 schematically shows a container **1** in which a battery cell **2,** a liquid coolant **3** and metal fragments **4** are mixed. The electrode contacts of the battery cell **2** are immersed in the liquid coolant **3.** A preferred mixing sequence may be: pouring the metal fragments **4** into the container **1,** inserting the battery cell **2,** pouring in more metal fragments **4** and pouring in the liquid coolant **3** (in this case no mechanical mixing is necessary to form a conductive contact of the electrode contacts). Another preferred mixing sequence may be: pouring the liquid coolant **3** into the container **1,** inserting the battery cell **2** and pouring in the metal fragments **4.** The container **1** is preferably made of an electrically non-conductive material (e. g. glass, plastic).

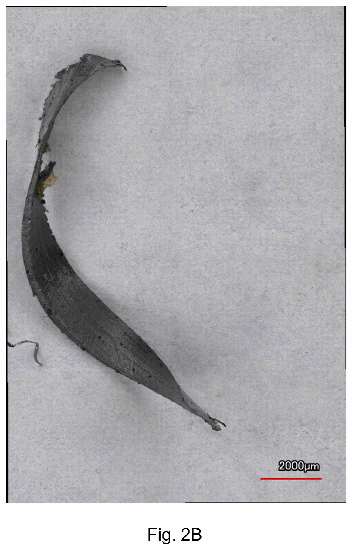

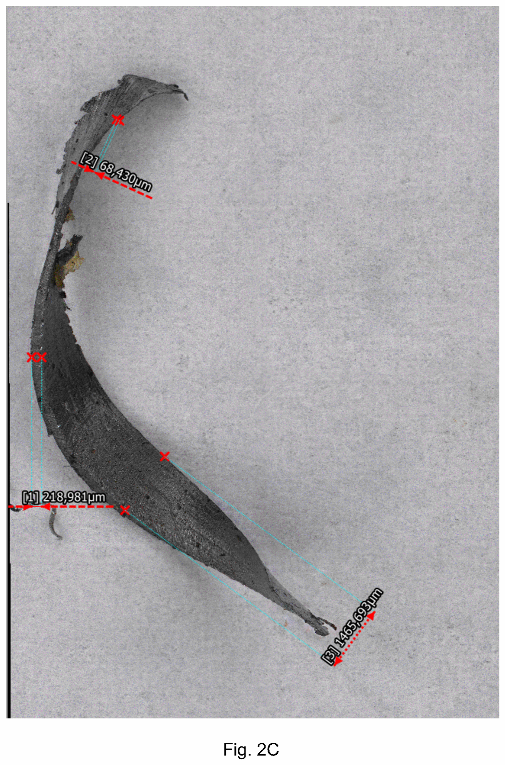

Figures 2A-2C show suitable metal fragments in the form of metal swarf obtained by machining. Such metal swarf is flat, slightly curved in shape with substantially straight edges, such as that shown in Figure 2C, having a thickness $t$ of 68 to 219 $\mu$m (average value 143 $\mu$m), a width of 1.466 mm, and an area S to volume $V$ ratio of 6.99 mm$^{-1}$ (see first calculation below), and satisfies the condition of an area-to-volume ratio ranging from 2 to 11 mm$^{-1}$ and a thickness ranging from 0.1 to 0.5 mm. For said swarf, the discharge is rapid (after 15 min of discharge, a drop below 0.5 V, followed by recovery after 24 h to below 1 V), see Example 3.

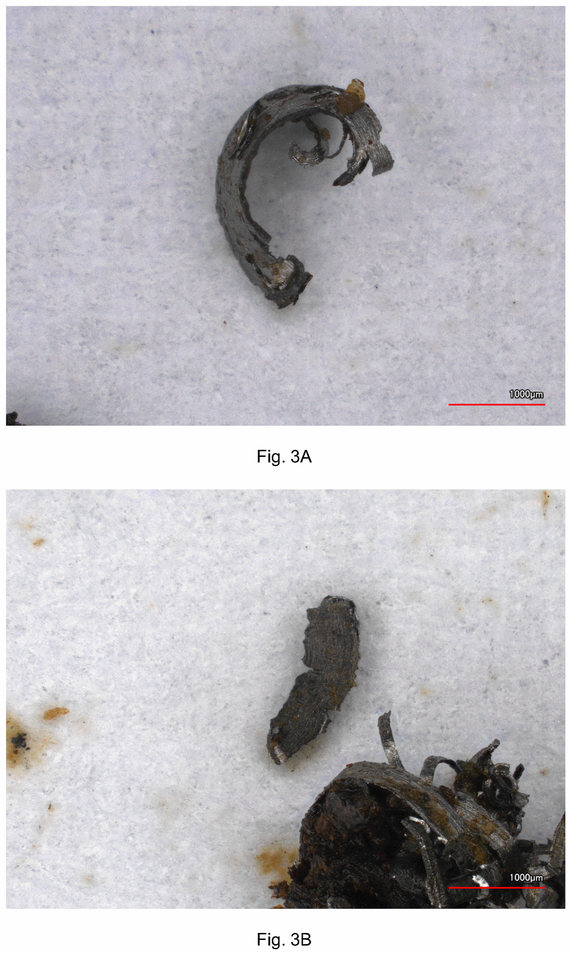

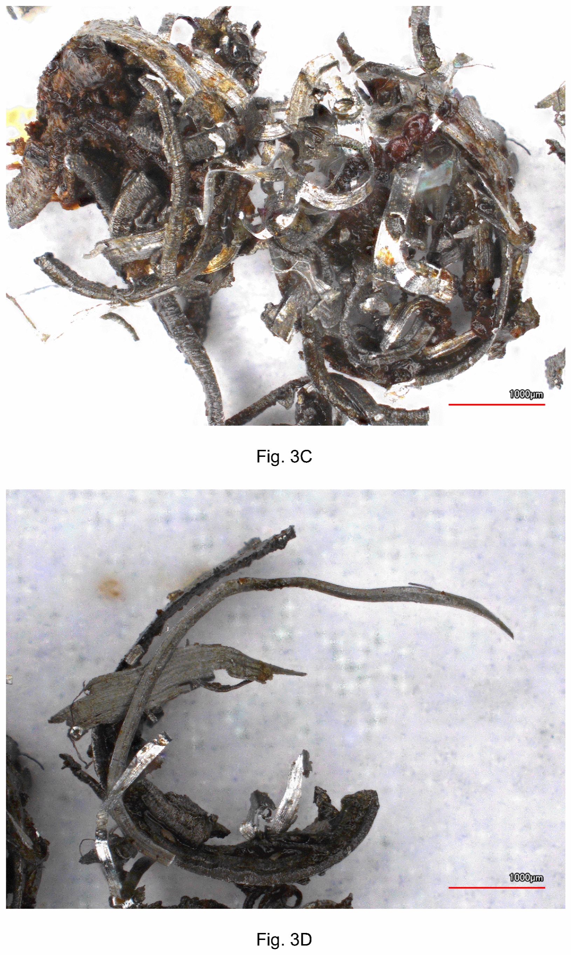

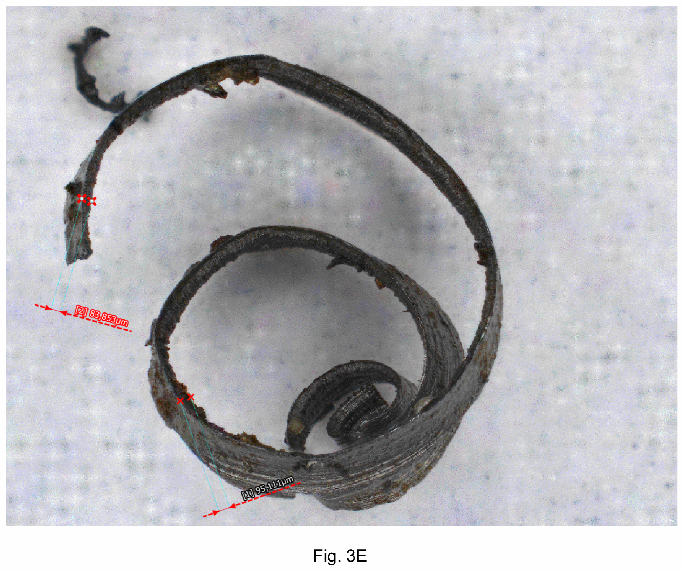

Figures 3A-3E show unsuitable metal fragments in the form of metal filings obtained by cutting. These metal filings are spiral-shaped, strongly curved in shape with sharp, uneven edges and hooked or beaked irregularities etc., e. g. in Figure 3E, having a thickness $t$ of 83 to 95 $\mu$m (average value 89 $\mu$m) and an area S to volume $V$ ratio of 11.24 mm$^{-1}$, i. e. dimensionally smaller than the swarf of Figs. 2A-2C, thus not meeting the condition of an area-to-volume ratio in the range of 2 to 11 mm$^{-1}$ (see second calculation below) and a thickness in the range of 0.1 to 0.5 mm. Clusters of metal fragments are visible in Figs. 3C and 3D, which is a consequence of their shape. For these filings, the discharge is more gradual (dropping below 0.5 V after 25 h of discharge, with subsequent recovery to 0.7 V after 24 h).

$$1.\,Area-to-volume\;ratio_{(machining)} = \frac{S}{V} = \frac{S}{S \cdot t} = \frac{1}{t} = \frac{1}{\frac{0,068+0,219}{2}} = \frac{1}{0,143}$$

$$= 6,99\;mm^{-1}$$

$$2.\,Area-to-volume\;ratio_{(cutting)} = \frac{S}{V} = \frac{S}{S \cdot t} = \frac{1}{t} = \frac{1}{\frac{0,083+0,095}{2}} = \frac{1}{0,089} = 11,24\;mm^{-1}$$

Example 2

Further suitable metal fragments in the form of metallic swarf obtained by machining are flat, slightly curved in shape with substantially straight edges, having an average thickness $t$ of 435 $\mu$m and an area $S$ to volume $V$ ratio of 2.30 mm$^{-1}$ (see third calculation below), or having an average thickness $t$ of 108 $\mu$m and an area S to volume V ratio of 9.26 mm$^{-1}$ (see fourth calculation below). These fragments satisfy the condition of an area-to-volume ratio between 2 and 11 mm$^{-1}$ and a thickness between 0.1 and 0.5 mm. For said swarf, the discharge is rapid (dropping below 0.5 V after 15 min of discharge, followed by recovery below 1 V after 24 h).

$$3.\,Area-to-volume\;ratio_{(machining)} = \frac{S}{V} = \frac{S}{S \cdot t} = \frac{1}{t} = \frac{1}{0,435} = 2,30\;mm^{-1}$$

$$4.\,Area-to-volume\;ratio_{(cutting)} = \frac{S}{V} = \frac{S}{S \cdot t} = \frac{1}{t} = \frac{1}{0,108} = 9,26\;mm^{-1}$$

Example 3

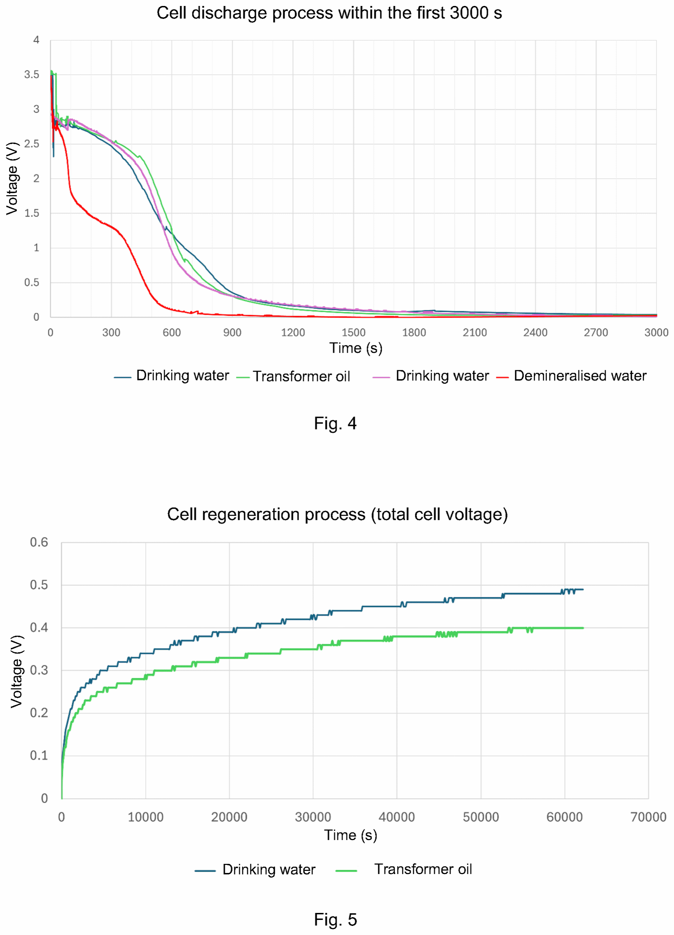

Figure 4 shows an example of a dependence of the voltage across the electrode contacts of the battery cell on the discharge time in a liquid coolant - demineralised water (red), drinking water (blue, purple) and transformer oil (green). The voltage across the electrode contacts of the battery cell drops below 0.5 V in less than 10 min for demineralised water and in less than 15 min for drinking (tap) water and transformer oil. In all cases, the voltage across the electrode contacts of the battery cell drops to 0 V after 50 min.

Figure 5 shows a dependence of the total battery cell voltage on the regeneration time after discharge in a liquid coolant - drinking water (blue) and transformer oil (green). In the case of drinking (tap) water, the total battery cell voltage reaches 0.5 V after regeneration for approximately 16 hours. For transformer oil, the total battery cell voltage reaches 0.4 V after regeneration for approximately 14 hours. Since the effective voltage across the electrode contacts of the battery cell in Fig. 4 has dropped to 0 V, the curves in Fig. 5 have an increasing waveform, i. e. the battery cell regenerates and the charge within the cell equalises.

Industrial applicability

The above-described method can be used in waste and recycling pre-processing of battery cells.

List of reference signs

1     container
2     battery cell
3     liquid coolant
4     metal fragment

**Claims**

1. A method of discharging a battery cell (2), comprising mixing the battery cell (2), a liquid coolant (3) and metal fragments (4) such that electrode contacts of the battery cell (2) are immersed in the liquid coolant (3), whereby the battery cells are discharged by a short-circuit current generated by connecting the electrode contacts by means of the metal fragments in the liquid coolant, wherein the metal fragment means a metal chip, swarf or shavings, **characterised in that** the metal fragments (4) have an area-to-volume ratio in the range of 2 to 11 mm$^{-1}$ and a thickness in the range of 0.1 to 0.5 mm.

2. The method according to claim 1, **characterised in that** the metal fragments (4) have an area-to-volume ratio greater than 2.2 mm$^{-1}$ and a thickness of less than 0.45 mm.

3. The method according to claim 2, **characterised in that** the metal fragments (4) have an area-to-volume ratio in the range of 4 to 10 mm$^{-1}$ and a thickness in the range of 0.1 to 0.25 mm.

4. The method according to any one of the preceding claims, **characterised in that** the metal fragments (4) are waste products of subtractive manufacturing processes.

5. The method according to claim 4, **characterised in that** the metal fragments (4) are chips or swarf obtained by machining, cutting, turning or milling.

6. The method according to any one of the preceding claims, **characterised in that** the liquid coolant (3) is water, mineral oil or glycerol, or mixtures thereof.

7. The method according to any one of the preceding claims, **characterised in that** the conductivity of the metal fragments (4) is in the range of 0.5 to 60 MS/m.

**Patentansprüche**

1. Ein Verfahren zum Entladen einer Batteriezelle (2), umfassend das Vermischen der Batteriezelle (2), eines flüssigen Kühlmittels (3) und Metallfragmenten (4) derart, dass die Elektrodenkontakte der Batteriezelle (2) in das flüssige Kühlmittel (3) eingetaucht sind, wobei die Batteriezellen durch einen Kurzschlussstrom entladen werden, der durch das Verbinden der Elektrodenkontakte mittels der Metallfragmente in dem flüssigen Kühlmittel erzeugt wird, wobei das Metallfragment einen Metallchip, Späne oder Schabungen bedeutet, **dadurch gekennzeichnet, dass** die Metallfragmente (4) ein Flächen-Volumen-Verhältnis im Bereich von 2 bis 11 mm$^{-1}$ und eine Dicke im Bereich von 0,1 bis 0,5 mm aufweisen.

**2.** Das Verfahren nach Anspruch 1, **dadurch gekennzeichnet, dass** die Metallfragmente (4) ein Flächen-Volumen-Verhältnis von mehr als 2,2 mm$^{-1}$ und eine Dicke von weniger als 0,45 mm aufweisen.

**3.** Das Verfahren nach Anspruch 2, **dadurch gekennzeichnet, dass** die Metallfragmente (4) ein Flächen-Volumen-Verhältnis im Bereich von 4 bis 10 mm$^{-1}$ und eine Dicke im Bereich von 0,1 bis 0,25 mm aufweisen.

**4.** Das Verfahren nach einem der vorstehenden Ansprüche, **dadurch gekennzeichnet, dass** die Metallfragmente (4) Abfallprodukte subtraktiver Fertigungsverfahren sind.

**5.** Das Verfahren nach Anspruch 4, **dadurch gekennzeichnet, dass** die Metallfragmente (4) Metallchips oder Späne sind, die durch Zerspanen, Schneiden, Drehen oder Fräsen gewonnen werden.

**6.** Das Verfahren nach einem der vorstehenden Ansprüche, **dadurch gekennzeichnet, dass** das flüssige Kühlmittel (3) Wasser, Mineralöl oder Glycerin, oder Mischungen davon ist.

**7.** Das Verfahren nach einem der vorstehenden Ansprüche, **dadurch gekennzeichnet, dass** die Leitfähigkeit der Metallfragmente (4) im Bereich von 0,5 bis 60 MS/m liegt.

**Revendications**

**1.** Un procédé de décharge d'une cellule de batterie (2), comprenant le mélange de la cellule de batterie (2), d'un liquide de refroidissement (3) et de fragments métalliques (4) de telle sorte que les contacts d'électrode de la cellule de batterie (2) soient immergés dans le liquide de refroidissement (3), les cellules de batterie étant ainsi déchargées par un courant de court-circuit généré par la connexion des contacts d'électrode au moyen des fragments métalliques présents dans le liquide de refroidissement, où les fragments métalliques désignent des éclats, des ébréchures ou des copeaux de métal, **caractérisé en ce que** les fragments métalliques (4) présentent un rapport surface/volume compris entre 2 et 11 mm$^{-1}$ et une épaisseur comprise entre 0,1 et 0,5 mm.

**2.** Le procédé selon la revendication 1, **caractérisé en ce que** les fragments métalliques (4) présentent un rapport surface/volume supérieur à 2,2 mm$^{-1}$ et une épaisseur inférieure à 0,45 mm.

**3.** Le procédé selon la revendication 2, **caractérisé en ce que** les fragments métalliques (4) présentent un rapport surface/volume compris entre 4 et 10 mm$^{-1}$ et une épaisseur comprise entre 0,1 et 0,25 mm.

**4.** Le procédé selon l'une quelconque des revendications précédentes, **caractérisé en ce que** les fragments métalliques (4) sont des déchets issus de procédés de fabrication par enlèvement de matière.

**5.** Le procédé selon la revendication 4, **caractérisé en ce que** les fragments métalliques (4) sont des éclats ou des copeaux obtenus par usinage, découpe, tournage ou fraisage.

**6.** Le procédé selon l'une quelconque des revendications précédentes, **caractérisé en ce que** le liquide de refroidissement (3) est de l'eau, de l'huile minérale ou du glycérol, ou des mélanges de ceux-ci.

**7.** Le procédé selon l'une quelconque des revendications précédentes, **caractérisé en ce que** la conductivité des fragments métalliques (4) est comprise entre 0,5 et 60 MS/m.

Fig. 1

Fig. 2A

Fig. 2B

Fig. 2C

Fig. 3A

Fig. 3B

Fig. 3C

Fig. 3D

Fig. 3E

## Cell discharge process within the first 3000 s

Fig. 4

## Cell regeneration process (total cell voltage)

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4020663 A1
- WO 2023106416 A1

- CN 104183887 A

**Non-patent literature cited in the description**

- **NAN et al.** Recovery of metal values from spent lithium-ion batteries with chemical deposition and solvent extraction. *Journal of Power Sources*, 2005, vol. 152, 278-284
- **GRATZ et al.** A closed loop process for recycling spent lithium ion batteries. *Journal of Power Sources*, 2014, vol. 262, 255-262, http://dx.doi.org/10.1016/j.jpowsour.2014.03.126
- **NEMBHARD**. Safe, Sustainable Discharge of Electric Vehicle Batteries as a Pre-treatment Step to Crushing in the Recycling Process. *final thesis*, http://kth.diva-portal.org/smash/get/diva2:1339943/-FULLTEXT01.pdf

- Enhanced electrochemical discharge of Li-ion batteries for safe recycling. **NEHA GARG et al.** Sustainable Energy Fuels. The Royal Society of Chemistry, 28 May 2024, vol. 8, 2777-2788
- **DAWEI YU et al.** Pretreatment options for the recycling of spent lithium-ion batteries: A comprehensive review. *Minerals Engineering*, 01 November 2021, vol. 173, 107218
- **LIN PENG YAO et al.** An environmentally friendly discharge technology to pretreat spent lithium-ion batteries. *Journal of Cleaner Production*, 01 February 2020, vol. 245, 118820